# EUROPEAN PATENT APPLICATION

(11) **EP 4 660 868 A1**
(43) Date of publication of application: **10.12.2025**
(21) Application number: 25180433.2
(22) Date of filing: 03.06.2025
(51) Int. Cl.: G06F 30/25, G06F 30/28, G06F 111/10, G06F 113/08

(54) **COMPUTER SYSTEM FOR SIMULATING PHYSICAL PROCESSES USING FRACTIONAL PARTICLE ADVECTION**

(30) Priority: 05.06.2024 US 202418734708
(71) Applicant: DASSAULT SYSTEMES AMERICAS CORP., Waltham, MA 02451 (US)
(72) Inventor: ZHANG, Raoyang, Waltham, 02451 (US); WANG, Junye, Waltham, 02451 (US); CHEN, Hudong, Waltham, 02451 (US)
(74) Representative: Fish & Richardson P.C.

(57) **Abstract**

Systems and methods for improving stability of a fluid flow simulation include receiving a digital representation of a simulation space including a three-dimensional computer-aided design model of the simulation space including a lattice structure represented as a plurality of voxels; determining a distribution of particles representing fluid flow in the plurality of voxels; determining a first portion of the distribution of particles comprising a non-equilibrium distribution of particles; and digitally simulating, in the digital representation, fluid flow in the lattice structure of the simulation space by advecting the first portion of the distribution of particles to different voxels of the plurality of voxels.

## Description

### CROSS REFERENCE TO RELATED APPLICATIONS

This application claims the benefit of U.S. Patent Application No. 18/734,708, filed on June 5, 2024, which is incorporated herein by reference in its entirety.

### BACKGROUND

This description relates to simulating physical processes, e.g., fluid flow.

High Reynolds number flow has been simulated by generating discretized solutions of the Navier-Stokes differential equations by performing high-precision floating point arithmetic operations at each of many discrete spatial locations on variables representing the macroscopic physical quantities (e.g., density, temperature, flow velocity). Another approach replaces the differential equations with what is generally known as lattice gas (or cellular) automata, in which the macroscopic-level simulation provided by solving the Navier-Stokes equations is replaced by a microscopic-level model that performs operations on particles moving between sites on a lattice.

### SUMMARY

Digital fluid flow simulations can be an important step in engineering research and/or design workflows. Digital fluid flow simulations implemented on data processing systems (e.g., high-speed supercomputers, massively parallel processing systems) can be used to solve large and complex problems in scenarios such as high-speed fluid flows (e.g., transonic, supersonic, and/or hypersonic fluid flows) and/or turbulent flows. Digital fluid flow simulations can provide insight into fluid quantities (e.g., pressure, density, temperature, velocity) that are difficult to measure in experimental testing (e.g., wind tunnel testing, flight testing, etc.). Digital fluid flow simulations can provide reduced cost and improved efficiency in a product design process because digital simulations can be less costly and faster to run than full-scale experimental testing on functional prototypes enabling more iterations on the product's design.

In an example implementation, a computer system to improve stability of a fluid flow simulation in a three-dimensional computer-aided design (CAD) model of a simulation space includes one or more processors; and a memory including a mesh preparation engine for generating and storing a digital representation of a simulation space, the digital representation including a three-dimensional CAD model of the simulation space including a mesh represented as a plurality of voxels; and a simulation engine for reading, from the mesh preparation engine, the digital representation of the simulation space including the mesh, with the simulation engine storing instructions to improve stability of a fluid flow simulation, the instructions, when executed by the one or more processors, cause the one or more processors to perform operations including reading, from the mesh preparation engine, the digital representation of the simulation space including the three-dimensional CAD model of the simulation including the mesh represented as the plurality of voxels; determining a distribution of particles representing fluid flow in the plurality of voxels; determining a first portion of the distribution of particles comprising a non-equilibrium distribution of particles; and digitally simulating, in the digital representation, fluid flow in the mesh of the simulation space by advecting the first portion of the distribution of particles to different voxels of the plurality of voxels.

**In** another example implementation, a method implemented by a data processing system to improve stability of a fluid flow simulation in a three-dimensional CAD model of a simulation space includes receiving, by a data processing system, a digital representation of a simulation space, the digital representation including a three-dimensional CAD model of the simulation space including a lattice structure represented as a plurality of voxels; determining, by the data processing system, a distribution of particles representing fluid flow in the plurality of voxels; determining, by the data processing system, a first portion of the distribution of particles comprising a non-equilibrium distribution of particles; and digitally simulating, in the digital representation by the data processing system, fluid flow in the lattice structure of the simulation space by advecting the first portion of the distribution of particles to different voxels of the plurality of voxels.

In another example implementation, one or more non-transitory machine-readable storage devices storing instructions to improve stability of a fluid flow simulation in a three-dimensional CAD model of a simulation space, the instructions being executable by one or more processors, to cause performance of operations including receiving a digital representation of a simulation space, the digital representation including a three-dimensional CAD model of the simulation space including a lattice structure represented as a plurality of voxels; determining a distribution of particles representing fluid flow in the plurality of voxels; determining a first portion of the distribution of particles comprising a non-equilibrium distribution of particles; and digitally simulating, in the digital representation, fluid flow in the lattice structure of the simulation space by advecting the first portion of the distribution of particles to different voxels of the plurality of voxels.

In an aspect combinable with one, some, or all of the example implementations, the first portion of the distribution of particles includes a first portion of an equilibrium distribution of particles.

Another aspect combinable with the previous aspect includes determining a second portion of the distribution of particles including a second portion of the equilibrium distribution of particles.

In another aspect combinable with one, some, or all of the previous aspects, the first portion of the equilibrium distribution includes a specified fraction of the equilibrium distribution.

In another aspect combinable with one, some, or all of the previous aspects, the second portion of the equilibrium distribution of particles includes a complement of the specified fraction of the equilibrium distribution.

In another aspect combinable with one, some, or all of the previous aspects, advecting the first portion of the distribution of particles improves numerical stability of simulating the fluid flow and decreases numerical dissipation of simulating the fluid flow for low viscosity fluids compared with a conventional Lattice Boltzmann simulation using fractional advection.

In another aspect combinable with one, some, or all of the previous aspects, simulating the fluid flow uses an unmodified fluid viscosity.

Another aspect combinable with one, some, or all of the previous aspects includes reading from the memory, the distribution of particles representing fluid flow in the plurality of voxels; storing in the memory the first portion of the distribution of particles comprising the non-equilibrium distribution of particles; and storing in the memory results of a digital simulation of the fluid flow in the digital representation of the simulation space including the mesh, the results generated by advecting the first portion of the distribution of particles to different voxels of the plurality of voxels.

One or more of the above aspects may provide one or more of the advantages disclosed herein. The fractional particle advection process described herein can reduce numerical dissipation and/or numerical instability during digital simulations as compared with previous fractional advection methods. The fractional particle advection process described herein can achieve reduced numerical instability and reduced numerical dissipation when simulating low viscosity fluids as compared with standard lattice Boltzmann methods. The fractional particle advection process improves the manner in which a computing system processes data during a fluid simulation resulting in improved stability of the simulation, a reduced number of computations necessary to perform the simulation, and improved accuracy of the computational results. This reduction in computational complexity conserves computing resources because less processing power is needed to perform the computation, relative to an amount of processing power needed for more complex computations. This reduction in computational complexity also increases the speed at which a processing device performs the computation. Generally, processing power includes an ability of a computer (or processing device) to process data. The fractional particle advection can increase the stability of simulations of high Mach number flows (e.g., high fluid velocities relative to the speed of sound of the fluid) extending the achievable Mach number range of the simulation as compared with a simulation not using fractional particle advection.

Other features and advantages of the invention will be apparent from the following detailed description of the preferred embodiments, and from the claims.

### BRIEF DESCRIPTION OF THE DRAWINGS

FIG. 1 depicts a system for simulation of fluid flows.
FIG. 2 depicts a flow chart showing operations for formulation of a Lattice Boltzmann Model simulation with fractional advection.
FIG. 3 depicts a flow chart showing simulation operations using the Lattice Boltzmann model with fractional advection.
FIG. 4 depicts a flow chart showing fractional advection.
FIGS. 5 and 6 each illustrate velocity components of two Lattice Boltzmann models represented in Euclidean space (prior art).
FIG. 7 depicts a flow chart of a procedure followed by a physical process simulation system using corrected computer-aided design (CAD) drawings.
FIG. 8 illustrates a perspective view of a microblock (prior art).
FIGS. 9A - 9B each illustrate lattice structures used by the system of FIG. 1 (prior art).
FIGS. 10 and 11 each illustrate variable resolution techniques (prior art).
FIG. 12 illustrates movement of particles (prior art).
FIG. 13 illustrates regions affected by a facet of a surface (prior art).
FIG. 14 depicts a flow chart for surface dynamics (prior art).
FIG. 15 illustrates a procedure for performing surface dynamics (prior art).
FIGS. 16A-16B each illustrate example results of the approach of the present disclosure for a shear wave simulation.
FIGS. 17A-17B each illustrate example results of the approach of the present disclosure for a shear wave simulation.
FIGS. 18A-18B each illustrate example results of the approach of the present disclosure for a gravity driven channel flow simulation.
FIGS. 19A-19C each illustrate example results of the approach of the present disclosure for a density/pressure wave propagation simulation.

The details of one or more implementations of the systems and methods of this disclosure are set forth in the accompanying drawings and the description below. Other features, objects, and advantages of these systems and methods will be apparent from the description and drawings, and from the claims.

### DESCRIPTION

Digital fluid flow simulations can be an important step in engineering research and/or design workflows. Digital fluid flow simulations implemented on data processing systems (e.g., high-speed supercomputers, massively parallel processing systems) can be used to solve large and complex problems in scenarios such as high-speed fluid flows (e.g., transonic, supersonic, and/or hypersonic fluid flows) and/or turbulent flows. Digital fluid flow simulations can provide insight into fluid quantities (e.g., pressure, density, temperature, velocity) that are difficult to measure in experimental testing (e.g., wind tunnel testing, flight testing, etc.). Digital fluid flow simulations can provide reduced cost and improved efficiency in a product design process because digital simulations can be less costly and faster to run than full-scale experimental testing on functional prototypes enabling more iterations on the product's design.

Numerical solutions such as digital fluid flow simulations involve discretizing a spatial domain of interest and then utilizing time-integration techniques to advance the solution in time. The spatial discretization is usually accomplished using highly automated grid generation tools, whereas the temporal discretization (time-step size) needs to be chosen carefully to ensure stability and accuracy of the numerical solution at an acceptable numerical cost. In particular, the stability characteristic (e.g., Courant-Friedrichs-Lewy (CFL) constraint) of the time-marching scheme determines the largest time-step size that can be used without making the solution unstable. Two types of time-marching schemes are commonly employed - implicit and explicit. On one hand, implicit methods satisfy the CFL constraint by construction, and hence large time-steps can be used without making the solution unstable (however too large time-steps generally lead to inaccurate results). Implicit methods require solution of a large system of matrix coefficients, thus making their implementation both non-trivial and computationally expensive. Explicit methods, on the other hand, are very simple to implement, computationally inexpensive (per iteration) and highly parallelizable, but need to satisfy a stringent CFL constraint. Explicit methods can require extremely small time-steps for spatial grids with small sized elements severely affecting the simulation performance. This is true even if the number of such small sized elements is very limited in the simulation domain - the smallest element in the entire domain determines the CFL condition and hence the time-step size. For practical problems involving complex geometries, using irregular grids is inevitable for surface and volume discretization. On these grids, the spatial grid size can vary significantly, and the use of explicit schemes can become very inefficient due to the extremely small time-steps required by the CFL constraint. Therefore, explicit scheme practitioners spend a large amount of time and effort trying to improve the quality of spatial grids, attempting to alleviate the problem. Even then it is almost impossible to remove all small sized elements from any discretization of realistic geometry and as a result, small time-steps (at least locally) are the only way to make the solutions stable.

One method for simulating fluid flows is the so-called Lattice Boltzmann Model (LBM). The LBM has been quite successful as a viable computational fluid dynamics (CFD) tool in both research communities and industrial applications during the last several decades. Compared to the conventional CFD methods, LBM has many advantages on simulating unsteady fluid flows with complex geometries. For example, an LBM uses a simpler algorithm and is easier to parallelize and scale than a conventional Navier-Stokes solver. The LBM performs mesoscale simulations and can handle complex physics and complex geometries. In an LBM-based physical process simulation system, a digital representation of a simulation space includes a lattice structure or mesh represented as a plurality of voxels or cells. The fluid flow is represented by distribution function values for each voxel or cell. The distribution functions are evaluated at a set of discrete velocities using the well-known Lattice Boltzmann equation that describes the time-evolution of the distribution function. The distribution function involves two processes: a streaming process and a collision process. Due to the kinetic nature of the LBM, the explicit fluid particle advection in the standard LBM is precise with a stability characteristic marginally satisfied (e.g., equal to unit). For example, the CFL condition includes a ratio of the time step to the grid spacing in the lattice which can be marginally satisfied by determining a lattice time step based on the lattice grid spacing.
Such a fluid particle advection brings very low numerical dissipation. However, as an undesirable consequence, it can also suffer from numerical instability when the local viscosity is low.

The present disclosure provides a new volumetric approach that uses fractional particle advection for LBMs. This approach recovers the same macroscopic hydrodynamics as the standard LBM without any approximation. This approach improves the numerical stability of the LBM for simulations with small viscosity (e.g., an effectively reduced CFL number can be achieved). This approach reduces the numerical dissipation and the additional computational cost caused by fractional advection compared to conventional fractional advection methods. The accuracy of the solution provided by this approach in any fractional situation is comparable to the accuracy of the standard LBM.

Fractional particle advection can reduce the particle advection time step to achieve better numerical stability (e.g., reducing the CFL number). During each fluid particle advection, only part of the post-collide fluid particles are propagated to neighboring cells in the mesh along the discrete particle velocity. The other part stays at the original cell. That is, before particle advection, the post-collide particle distribution can be split into two parts, a move portion, , and a stay portion. The move portion is moved from the original cell to the destination cell according to the lattice velocity and the stay portion remains at the original cell. After the advection step (e.g., after the simulation time is increased by the lattice time step), the particle distribution at the destination cell includes the move portion from the original cell from the previous simulation time and the stay portion from the destination cell from the previous simulation time.

According to the present disclosure, the separation of the post-collide particle distribution into the move portion and the stay portion can be based on the equilibrium particle distribution and the non-equilibrium particle distribution.

In this approach, only the equilibrium distribution is split into the move portion and the stay portion while the nonequilibrium distribution is included in the move portion and is fully advected. This fractional advection scheme improves numerical stability of the LBM and does not increase numerical dissipation compared to the standard LBM especially at low grid resolution or in near wall regions with a small fractional advection parameter. The fraction advection parameter can be adjusted to determine the fraction of the equilibrium distribution included in the move portion, and the corresponding complement of the equilibrium distribution forms the stay portion. This approach also does not require gradient information for additional states. Determining gradient information for additional states can pose challenges in simulation regions close to walls, in variable resolution (VR) meshes, and at sliding mesh interfaces, Additionally, determining gradient information for additional states causes additional computational cost for the simulation.

It can be shown (e.g., by the Chapman-Enskog expansion) that the fractional particle advection approach of this disclosure also recovers the Navier-Stokes equations with the same order of accuracy without any approximation. The derivation is straightforward using, for example, the standard Bhatnagar-Gross-Krook (BGK) collision form for the nonequilibrium distribution.

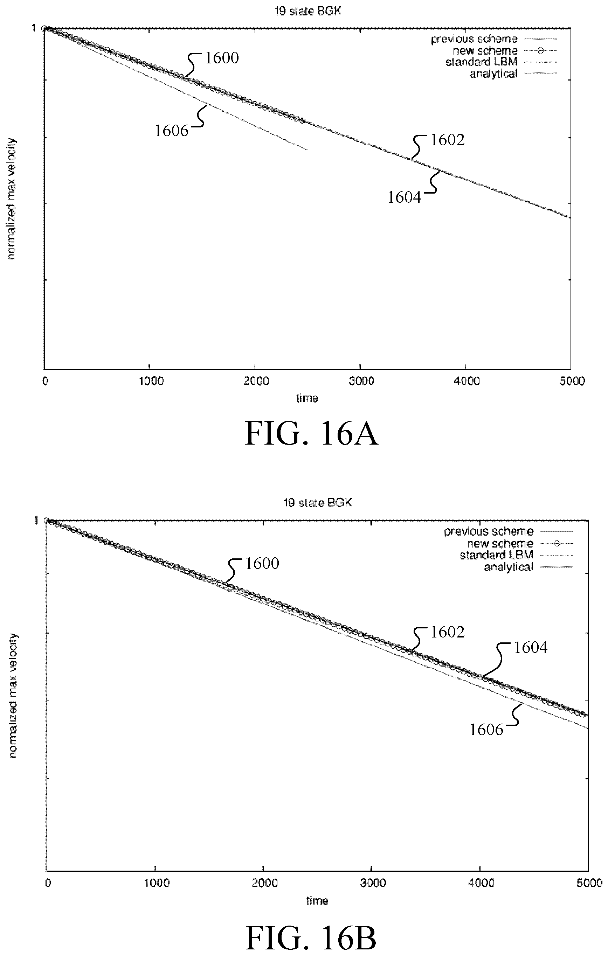

In the approach of the present disclosure, only the equilibrium states are partially propagated (e.g., only the equilibrium distribution is split between the move and the stay portions). The non-equilibrium states are fully advected without delay. This is advantageous because advecting the non-equilibrium states reduces numerical dissipation and improves stability of the simulation. The approach of the present disclosure does not need to calculate the states gradient to recover the Navier-Stokes equations resulting in reduced computations compared to conventional methods. Additionally, the original viscosity is precisely realized without any modification. The current approach yields much less numerical dissipation on a set of benchmark cases than the previous fractional advection approaches, especially when γ is far away from unity (see FIGS. 16A-19C). The numerical dissipation of the current approach is comparable to the standard LBM and the numerical dissipation is insensitive to the value of fractional advection factor γ. The reduction in the numerical dissipation of the current approach compared with the standard LBM may be due to the hyperviscosity effect. The current approach is also more stable than the standard LBM, especially for low viscosities (e.g., high Reynolds numbers) and/or low resolution meshes.

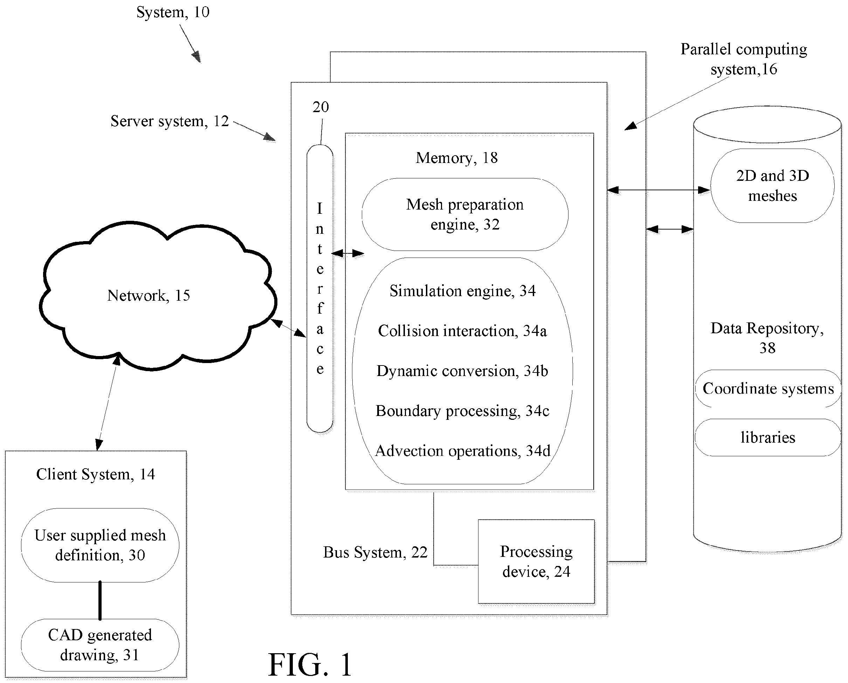

Referring to FIG. 1, a system 10 that executes a Lattice Boltzmann (LB) based simulation includes fractional advection operations 34d. The system 10 in this implementation is based on a client-server or cloud based architecture and includes a server system 12 implemented as a massively parallel computing system 16 (stand alone or cloud-based) and a client system 14 coupled via a network 15. The server system 12 includes memory 18, a bus system 22, interfaces 20 (e.g., user interfaces/network interfaces/display or monitor interfaces, etc.) and a processing device 24. In memory 18 are a mesh preparation engine 32 and a simulation engine 34.

While FIG. 1 shows mesh preparation engine 32 in memory 18, the mesh preparation engine can be a third party application that is executed on a different system than server 12. Whether mesh preparation engine 32 executes in memory 18 or is executed on a different system than server 12, mesh preparation engine 32 receives a user-supplied mesh definition 30 based on CAD generated drawings 31 and then prepares a mesh and sends (and/or stores) the prepared mesh to simulation engine 34.

Simulation engine 34 includes collision interaction module 34a, which includes surface dynamics conversion 34b, boundary processing module 34c, and fractional particle advection operations 34d. System 10 accesses data repository 38, which stores 2D and/or 3D meshes (Cartesian and/or curvilinear), coordinate systems, and libraries.

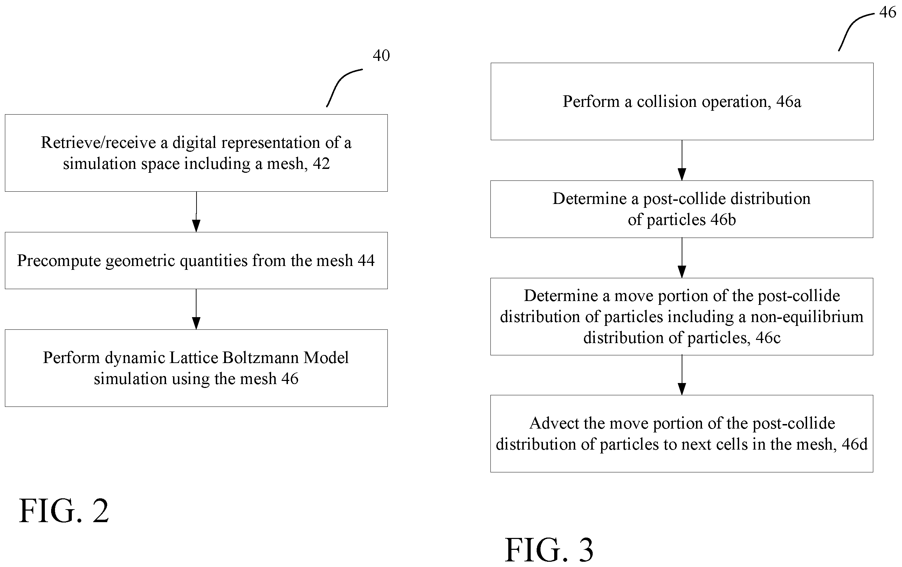

Referring to FIG. 2, a process 40 for simulating fluid flow about a representation of a physical object is shown. In the example that will be discussed herein, the physical object is an airfoil. The use of an airfoil is merely illustrative however, as the physical object can be of any shape and, in particular, can have planar and/or curved surface(s). Process 40 receives 42, e.g., from client system 14 or retrieves from data repository 38 (not shown), a mesh (or grid) for the physical object being simulated. In other embodiments, either an external system or the server 12 based on user input, generates the mesh for the physical object being simulated. The process precomputes 44 geometric quantities from the retrieved mesh and performs dynamic Lattice Boltzmann Model simulation 46 using the precomputed geometric quantities corresponding to the retrieved mesh. Lattice Boltzmann Model simulation includes the simulation 46 of evolution of particle distribution that includes the surface dynamics conversion, boundary modeling, and advection of particles to a next cell in the LBM mesh. The particle distribution includes a digital representation of the digital particles in the voxels in the LBM mesh.

Referring to FIG. 3, the simulation process 46 simulates evolution of particle distribution according to a modified Lattice Boltzmann process (LBp), e.g., using fractional particle advection operations 34d (FIG. 1). Process 46 (see FIG. 2) performs a collision operation 46a, determines a post-collide distribution of particles 46b, determines a move portion of the post-collide distribution of particles including a non-equilibrium distribution of particles, and advects the move portion of the post-collide distribution of particles to next cells in the LBM mesh 46d.

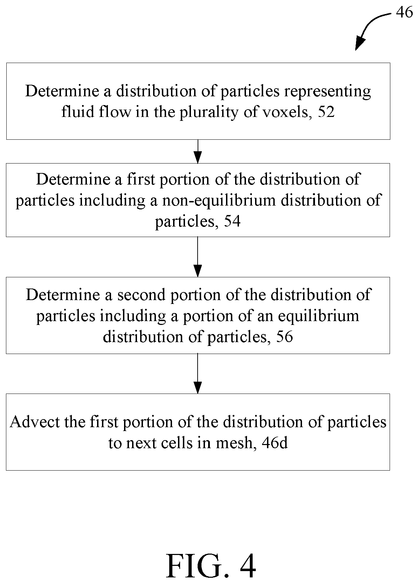

Referring to FIG. 4, the simulation process 46 performs a generally conventional collision operation 46a (FIG. 3). The collision operation 46a is used to determine 52 a distribution of particles that represents fluid flow in the voxels or cells of the mesh. To determine the outgoing particle distribution, a first portion (e.g., move portion) of the particle distribution is determined 54. The first portion includes the non-equilibrium distribution of particles in its entirety. The first portion can also include a first portion of the equilibrium distribution. The portion of the equilibrium distribution can be determined based on a specified fraction (e.g., the fractional advection parameter). A second portion (e.g., stay portion) of the particle distribution is determined 56. The second portion includes a second portion of the equilibrium particle distribution. The second portion of the equilibrium particle distribution can include the complement of the first portion of the equilibrium particle distribution (e.g., the portion of the equilibrium particle distribution not included in the move portion). The first portion of the particle distribution is advected to the next cells or voxels in the mesh 46d.

### Detailed Example

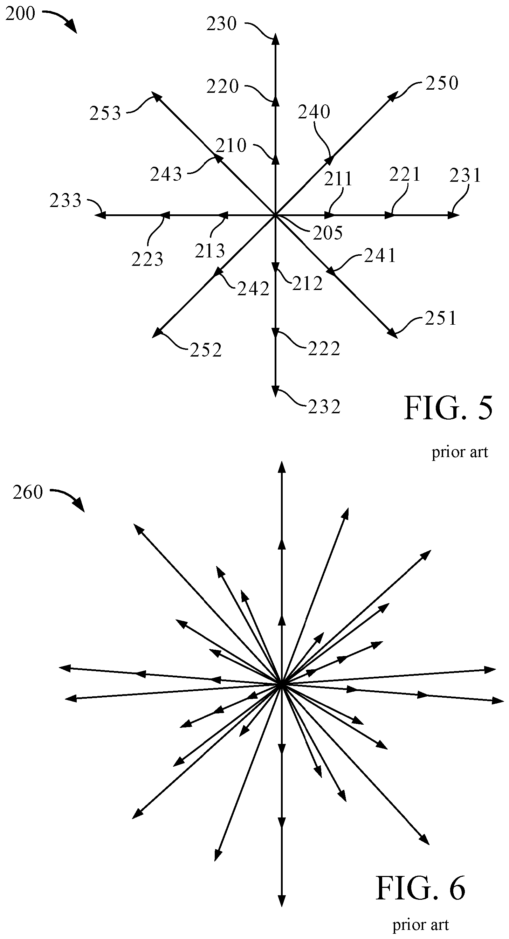

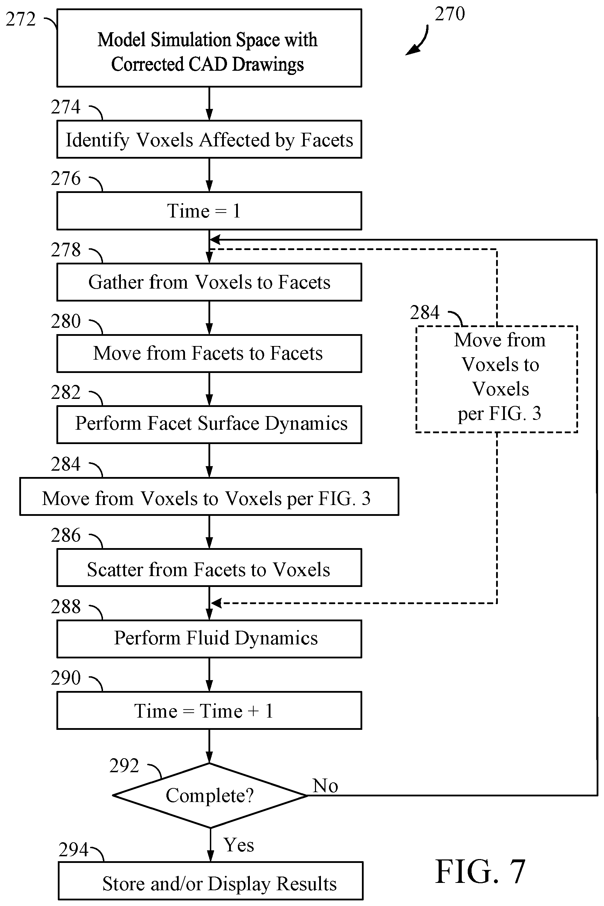

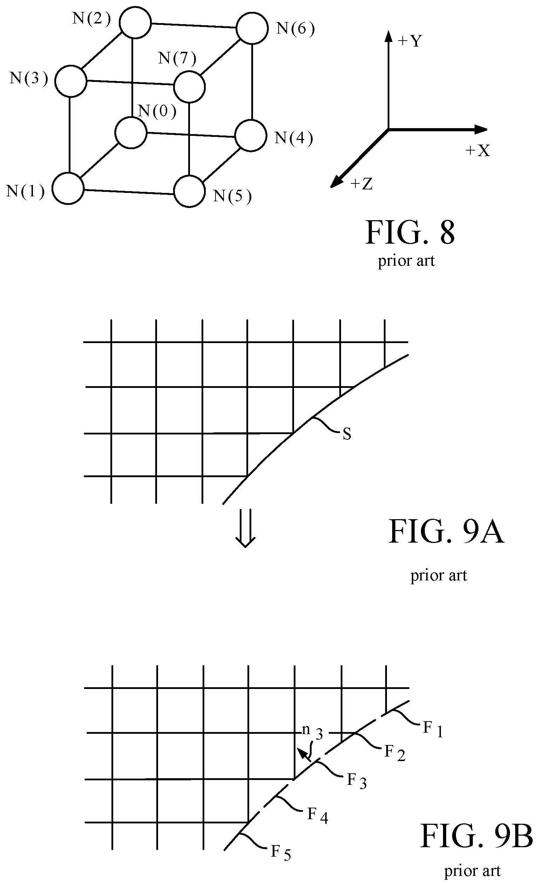

In the procedure discussed in reference to FIG. 7 below, a flow simulation process is described using CAD drawings with the identified void space to configure a simulation space. Referring to FIGS. 5 and 6 that precede, as well as FIG. 8, FIGS. 9A - 9B, FIGS. 10 and 11, and FIGS. 12, 13, 14, and 15, each of these figures are labeled as prior art because these figures appear in U.S. Patent 5,848,260 (the '260 patent) or U.S. Patent 11,847,391 (the '391 patent), both of which are hereby incorporated by reference in their entirety.

However, the figures as they appear in the above patents do not take into consideration any modifications that would be made to a flow simulation using the fractional particle advection process 46 because that process described herein is not described in the above-referenced patents.

### Model Simulation Space

In an LBM-based physical process simulation system, fluid flow is represented by the distribution function values evaluated at a set of discrete velocities. The dynamics of the distribution function is governed by the Lattice Boltzmann equation which relates the change of the distribution due to the so-called "streaming process" to changes in the distribution function due to the "collision process" The streaming process is when a pocket of fluid starts out at a mesh location, and then moves along one of the plural velocity vectors to the next mesh location. At that point, the "collision factor," i.e., the effect of nearby pockets of fluid on the starting pocket of fluid, is calculated. The fluid can only move to another mesh location, so the proper choice of the velocity vectors is necessary so that all of the components of all of the velocities are multiples of a common speed. The collision process uses a "collision operator" to represent the change of the distribution function due to the collisions among the pockets of fluids. The particular form of the collision operator is of the Bhatnagar, Gross and Krook (BGK) operator. The collision operator forces the distribution function to go to prescribed values.

The BGK operator is constructed according to the physical argument that, no matter what the details of the collisions, the distribution function approaches a well-defined local equilibrium via collisions. according to a characteristic relaxation time to reach equilibrium via collisions. Dealing with particles (e.g., atoms or molecules), the relaxation time is typically taken as a constant.

From this simulation, conventional fluid variables, such as mass and fluid velocity, are obtained based on simple summations of products of the distribution. Due to symmetry considerations, the set of velocity values are selected in such a way that they form certain lattice structures when spanned in the configuration space. The dynamics of such discrete systems obey the LBE, where the collision operator usually takes the BGK form as described above. By proper choice of the equilibrium distribution forms, it can be theoretically shown that the Lattice Boltzmann equation gives rise to correct hydrodynamics and thermo-hydrodynamics. That is, the hydrodynamic moments derived from the distribution function obey the Navier-Stokes equations in the macroscopic limit.

The collective values of the lattice velocities and the associated weights define an LBM. The LBM can be implemented, efficiently on scalable computer platforms and run with great robustness for time unsteady flows and complex boundary conditions.

A standard technique of obtaining the macroscopic equation of motion for a fluid system from the Boltzmann equation is the Chapman-Enskog method in which successive approximations of the full Boltzmann equation are taken. In a fluid system, a small disturbance of the density travels at the speed of sound. In a gas system, the speed of sound is generally determined by the temperature. The importance of the effect of compressibility in a flow is measured by the ratio of the characteristic velocity and the sound speed, which is known as the Mach number.

A general discussion of an LBM-based simulation system is provided below that includes the dynamic conversion 34b to conduct fluid flow simulations. For a further explanation of LBM-based physical process simulation systems, the reader is referred to the '260 patent.

Referring to FIG. 5, a first model (2D-1) 200 is a two-dimensional model that includes 21 velocities. Of these 21 velocities, one (205) represents particles that are not moving; three sets of four velocities represent particles that are moving at either a normalized speed (*r*) (210-213), twice the normalized speed (2*r*) (220-223), or three times the normalized speed (3*r*) (230-233) in either the positive or negative direction along either the *x* or *y* axis of the lattice; and two sets of four velocities represent particles that are moving at the normalized speed (*r*) (240-243) or twice the normalized speed *(2r)* (250-253) relative to both of the *x* and y lattice axes.

Referring to FIG. 6, illustrated is a second model (3D-1) 260 - a three-dimensional model that includes 39 velocities where each velocity is represented by one of the arrowheads of FIG. 4. Of these 39 velocities, one represents particles that are not moving; three sets of six velocities represent particles that are moving at either a normalized speed (*r*), twice the normalized speed (2*r*), or three times the normalized speed (3*r*) in either the positive or negative direction along the *x, y* or *z* axis of the lattice; eight represent particles that are moving at the normalized speed (r) relative to all three of the *x, y, z* lattice axes; and twelve represent particles that are moving at twice the normalized speed (2*r*) relative to two of the *x, y, z* lattice axes.

More complex models, such as a 3D-2 model, which includes 101 velocities, and a 2D-2 model which includes 37 velocities may also be used. For the three-dimensional model 3D-2, of the 101 velocities, one represents particles that are not moving (Group 1); three sets of six velocities represent particles that are moving at either a normalized speed (*r*), twice the normalized speed (2*r*), or three times the normalized speed (3*r*) in either the positive or negative direction along the *x, y* or z axis of the lattice (Groups 2, 4, and 7); three sets of eight represent particles that are moving at the normalized speed (*r*), twice the normalized speed (2*r*), or three times the normalized speed (3*r*) relative to all three of the *x, y, z* lattice axes (Groups 3, 8, and 10); twelve represent particles that are moving at twice the normalized speed (2*r*) relative to two of the *x, y, z* lattice axes (Group 6); twenty four represent particles that are moving at the normalized speed (r) and twice the normalized speed *(2r)* relative to two of the *x, y, z* lattice axes, and not moving relative to the remaining axis (Group 5); and twenty four represent particles that are moving at the normalized speed *(r)* relative to two of the *x, y, z* lattice axes and three times the normalized speed (3*r*) relative to the remaining axis (Group 9).

For the two-dimensional model 2D-2, of the 37 velocities, one represents particles that are not moving (Group 1); three sets of four velocities represent particles that are moving at either a normalized speed *(r),* twice the normalized speed *(2r),* or three times the normalized speed (3*r*) in either the positive or negative direction along either the *x* or *y* axis of the lattice (Groups 2, 4, and 7); two sets of four velocities represent particles that are moving at the normalized speed (r) or twice the normalized speed *(2r)* relative to both of the *x* and *y* lattice axes; eight velocities represent particles that are moving at the normalized speed *(r)* relative to one of the *x* and *y* lattice axes and twice the normalized speed (2*r*) relative to the other axis; and eight velocities represent particles that are moving at the normalized speed *(r)* relative to one of the *x* and *y* lattice axes and three times the normalized speed (3*r*) relative to the other axis.

The LB models described above provide a specific class of efficient and robust discrete velocity kinetic models for numerical simulations of flows in both two-and three-dimensions. A model of this kind includes a particular set of discrete velocities and weights associated with those velocities. The velocities coincide with grid points of Cartesian coordinates in velocity space which facilitates accurate and efficient implementation of discrete velocity models, particularly the kind known as the Lattice Boltzmann models. Using such models, flows can be simulated with high fidelity.

Referring to FIG. 7, a physical process simulation system that operates according to a procedure 270 to simulate a physical process such as fluid flow is described. Prior to the flow simulation, a simulation space is modeled (272) using CAD drawings as discussed above, as a collection of voxels. The simulation space is generated using a computer-aided-design (CAD) program and the gap correction processing of the CAD generated drawings. For example, a CAD program could be used to draw an air foil positioned in a wind tunnel.

The resolution of the lattice may be selected based on the Reynolds number of the system being simulated. The Reynolds number is related to the viscosity of the flow, the characteristic length of an object in the flow, and the characteristic velocity of the flow.

The characteristic length of an object represents large scale features of the object. For example, if flow around a micro-device were being simulated, the height of the micro-device might be considered to be the characteristic length. When flow around small regions of an object (e.g., the side mirror of an automobile) is of interest, the resolution of the simulation may be increased, or areas of increased resolution may be employed around the regions of interest. The dimensions of the voxels decrease as the resolution of the lattice increases.

The state space is represented as the distribution function of particles or particles, per unit volume in a given state at a lattice site denoted by a spatial vector at a given time. The number of states is determined by the number of possible velocity vectors within each energy level. The velocity vectors are integer linear speeds in a space having three dimensions: *x, y,* and z. The number of states is increased for multiple-species simulations. Each state represents a different velocity vector at a specific energy level (i.e., energy level zero, one or two). The velocity of each state is indicated with its "speed" in each of the three dimensions.

The energy level zero state represents stopped particles that are not moving in any dimension, i.e., the speed of the particles in each dimension is zero. Energy level one states represents particles having a ±1 speed in one of the three dimensions and a zero speed in the other two dimensions. Energy level two states represent particles having either a ±1 speed in all three dimensions, or a ±2 speed in one of the three dimensions and a zero speed in the other two dimensions.

Generating all of the possible permutations of the three energy levels gives a total of 39 possible states (one energy zero state, 6 energy one states, 8 energy three states, 6 energy four states, 12 energy eight states and 6 energy nine states.). Each voxel (i.e., each lattice site) is represented by a state vector. The state vector completely defines the status of the voxel and includes 39 entries. The 39 entries correspond to the one energy zero state, 6 energy one states, 8 energy three states, 6 energy four states, 12 energy eight states and 6 energy nine states. By using this velocity set, the system can produce Maxwell-Boltzmann statistics for an achieved equilibrium state vector.

For processing efficiency, the voxels are grouped in 2x2x2 volumes called microblocks. The microblocks are organized to permit parallel processing of the voxels and to minimize the overhead associated with the data structure.

A microblock is illustrated in FIG. 8. The voxels are represented at the corners of the microblock.

Referring to FIGS. 9A and 9B, a surface S (FIG. 9A) is represented in the simulation space (FIG. 9B) as a collection of facets F_{α}, where α is an index that enumerates a particular facet. A facet is not restricted to the voxel boundaries but is typically sized on the order of or is slightly smaller than the size of the voxels adjacent to the facet so that the facet affects a relatively small number of voxels. Properties are assigned to the facets for the purpose of implementing surface dynamics. In particular, each facet *F_{α}* has a unit normal (*n_{α}*), a surface area (*A_{α}*), a center location (*x_{α}*), and a facet distribution function (*fᵢ(α)*) that describes the surface dynamic properties of the facet. The total energy distribution function is treated in the same way as the flow distribution for facet and voxel interaction.

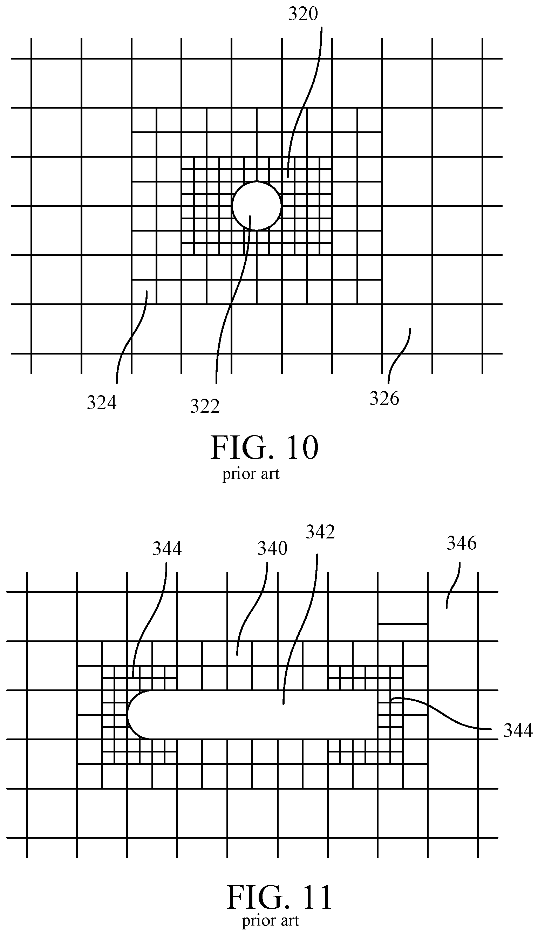

Referring to FIG. 10, different levels of resolution may be used in different regions of the simulation space to improve processing efficiency. Typically, the region 320 around an object 322 is of the most interest and is therefore simulated with the highest resolution. Because the effect of viscosity decreases with distance from the object, decreasing levels of resolution (i.e., expanded voxel volumes) are employed to simulate regions 324, 326 that are spaced at increasing distances from the object 322.

Similarly, as illustrated in FIG. 11, a lower level of resolution may be used to simulate a region 340 around less significant features of an object 342 while the highest level of resolution is used to simulate regions 344 around the most significant features (e.g., the leading and trailing surfaces) of the object 342. Outlying regions 346 are simulated using the lowest level of resolution and the largest voxels.

### C. Identify Voxels Affected By Facets

Referring again to FIG. 7, once the simulation space has been modeled (272), voxels affected by one or more facets are identified (274). Voxels may be affected by facets in a number of ways. First, a voxel that is intersected by one or more facets is affected in that the voxel has a reduced volume relative to non-intersected voxels. This occurs because a facet, and material underlying the surface represented by the facet, occupies a portion of the voxel. A fractional factor indicates the portion of the voxel that is unaffected by the facet (i.e., the portion that can be occupied by a fluid or other materials for which flow is being simulated). For non-intersected voxels the fractional factor equals one.

Voxels that interact with one or more facets by transferring particles to the facet or receiving particles from the facet are also identified as voxels affected by the facets. All voxels that are intersected by a facet will include at least one state that receives particles from the facet and at least one state that transfers particles to the facet. In most cases, additional voxels also will include such states.

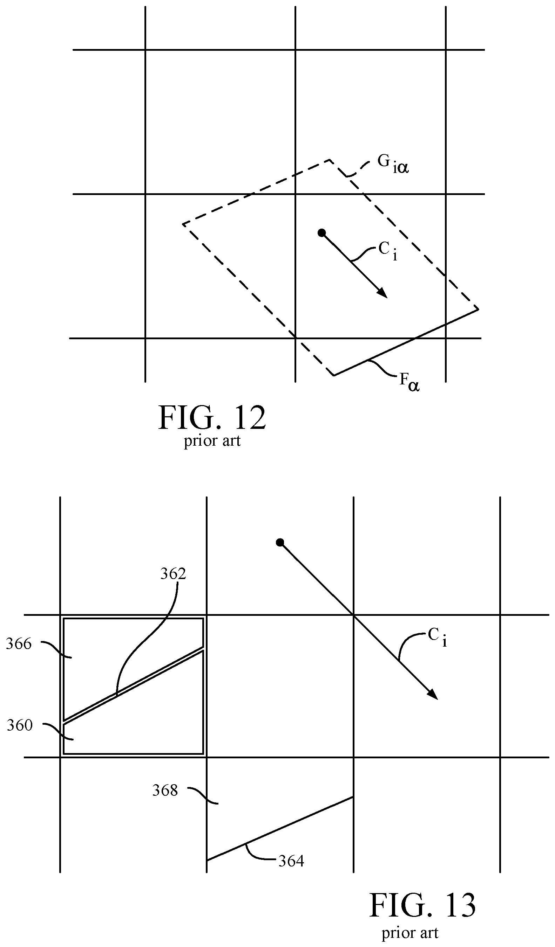

Referring to FIG. 12, for each state *i* having a non-zero velocity vector *cᵢ,* a facet *F*_{α} receives particles from, or transfers particles to, a region defined by a parallelepiped *G_{iα}* having a height defined by the magnitude of the vector dot product of the velocity vector *cᵢ* and the unit normal *n_{α}* of the facet and a base defined by the surface area *A_{α}* of the facet so that the volume *V_{iα}* of the parallelepiped *G_{iα}* equals the base times the height.

The facet *F_{α}* receives particles from the volume *V_{iα}* when the velocity vector of the state is directed toward the facet, and transfers particles to the region when the velocity vector of the state is directed away from the facet. As will be discussed below, this relationship is modified when another facet occupies a portion of the parallelepiped *C_{iα},* a condition that could occur in the vicinity of non-convex features of a surface such as interior corners.

The parallelepiped *G_{iα}* of a facet *F_{α}* may overlap portions or all of multiple voxels. The number of voxels or portions thereof is dependent on the size of the facet relative to the size of the voxels, the energy of the state, and the orientation of the facet relative to the lattice structure. The number of affected voxels increases with the size of the facet. Accordingly, the size of the facet, as noted above, is typically selected to be on the order of or smaller than the size of the voxels located near the facet.

The flux of particles for a given state that move between a voxel and a facet *F_{α}* equals the density of the particles of the state in the voxel multiplied by the volume of the region of overlap with the voxel. When the parallelepiped *G_{iα}* is intersected by one or more facets, the volume of the parallelepiped *V_{iα}* is equal to the summation of the volumes associated with each of the voxels overlapped by *G_{iα}* and the summation of the volumes associated with all of the facets that intersect *G_{iα}.*

### D. Perform Simulation

Referring to FIG. 7, once the voxels that are affected by one or more facets are identified (274), a timer is initialized to begin the simulation (276). During each time increment of the simulation, movement of particles from voxel to voxel is simulated by an advection stage (278-286) that accounts for interactions of the particles with surface facets. Next, a collision stage (288) simulates the interaction of particles within each voxel. Thereafter, the timer is incremented (290). If the incremented timer does not indicate that the simulation is complete (292), the advection and collision stages (278-288) are repeated. If the incremented timer indicates that the simulation is complete (292), results of the simulation are stored and/or displayed (294).

### 1. Boundary Conditions For Surface

To correctly simulate interactions with a surface, each facet meets four boundary conditions. First, the combined mass of particles received by a facet equals the combined mass of particles transferred by the facet (i.e., the net mass flux to the facet equals zero). Second, the combined energy of particles received by a facet equals the combined energy of particles transferred by the facet (i.e., the net energy flux to the facet equals zero). These two conditions may be satisfied by requiring the net mass flux at each energy level (i.e., energy levels one and two) to equal zero.

The other two boundary conditions are related to the net momentum of particles interacting with a facet. For a surface with no skin friction, referred to herein as a slip surface, the net tangential momentum flux equals zero and the net normal momentum flux equals the local pressure at the facet. Thus, the components of the combined, received, and transferred momentums that are perpendicular to the normal n_{α} of the facet (i.e., the tangential components) are equal, while the difference between the components of the combined, received, and transferred momentums that are parallel to the normal n_{α} of the facet (i.e., the normal components) equals the local pressure at the facet. For non-slip surfaces, friction of the surface reduces the combined tangential momentum of particles transferred by the facet relative to the combined tangential momentum of particles received by the facet by a factor that is related to the amount of friction.

### 2. Gather From Voxels to Facets

Simulating interaction between particles and a surface, particles are gathered from the voxels and provided to the facets (278). In the fractional particle advection process described herein, only the move portion of the particle distribution is moved from the voxels to the facets. As noted above, the size of the facets is selected so that the parallelepiped volumes for the facets have a non-zero value for only a small number of voxels. The volume of the parallelepipeds and the flux of particles can have non-integer values, and thus a data processing system stores and processes these quantities as real numbers.

### 3. Move From Facet to Facet

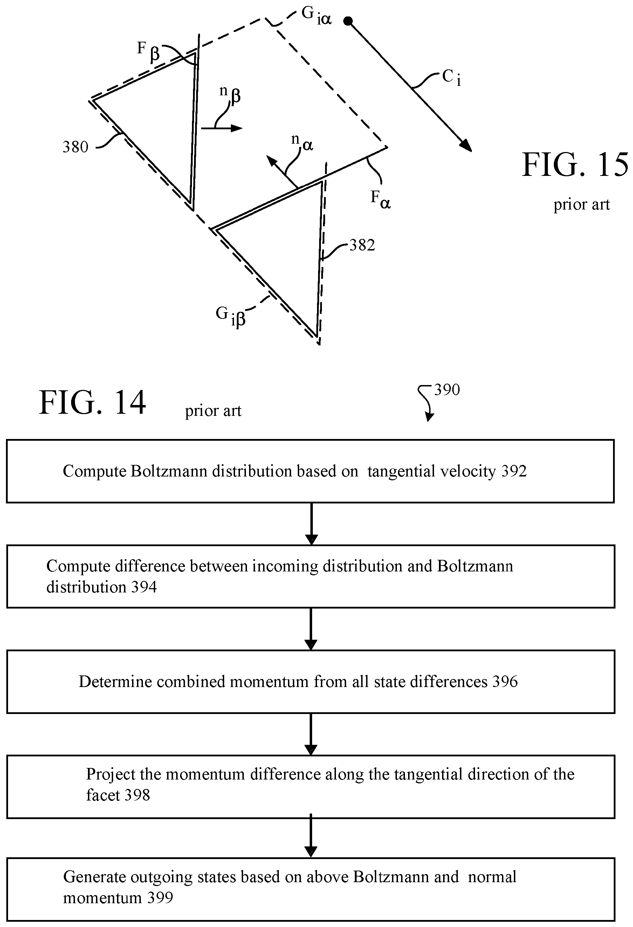

Next, particles are moved between facets (280). If the parallelepiped *G_{iα}* for an incoming state of a facet *F_{α}* is intersected by another facet *F_{β},* then a portion of the particles for the incoming state received by the facet *F_{α}* will come from the facet *F_{β}.* In particular, facet *F_{α}* will receive a portion of the particles for the given state produced by facet *F_{β}* during the previous time increment. This relationship is illustrated in FIG. 15, where a portion 380 of the parallelepiped *G_{iα}* that is intersected by facet F_{β} equals a portion 382 of the parallelepiped *G_{iβ}* that is intersected by facet*F_{α}*. For each state directed toward a facet *F_{α},* the number of particles provided to the facet *F_{α}* by the other facets is equal to the flux of particles from the other facets from the previous time step multiplied by the ratio of the overlapping volume between parallelepipeds of the other facets and the facet *F_{α}* for a given state and the total volume of the parallelepiped for the facet *F_{α}*. for that state.:

The total flux of particles for the given state into the facet *F_{α}* is equal to the sum of the particles from all of the voxels overlapping the parallelepipeds of the facet and the sum of the fluxes from all of the facets that have parallelepiped volumes overlapping with the parallelepiped volumes of the facet *F_{α}*: The state vector for the facet, also referred to as a facet distribution function, has a number of entries corresponding to the number entries of the voxel states vectors, where the number of entries is the number of discrete lattice speeds in the LBM. The input states of the facet distribution function are set equal to the flux of particles into those states divided by the volume *V_{iα}*.

The facet distribution function is a simulation tool for generating the output flux from a facet and is not necessarily representative of actual particles. To generate an accurate output flux, values are assigned to the other states of the distribution function. Outward states are populated using the technique described above for populating the inward states. In an alternative approach, the flux from states other than incoming states may be generated using values of the outward flux from the previous time step.

For parallel states (e.g., states with velocities parallel to the facet), the volume of the associated parallelepiped is zero. The facet distribution function for parallel states is determined as the limit of the facet distribution function as the volume of the parallelepiped and any overlapping parallelepipeds approach zero. The values of states having zero velocity (i.e., rest states and states (0, 0, 0, 2) and (0, 0, 0, -2)) are initialized at the beginning of the simulation based on initial conditions for temperature and pressure. These values are then adjusted over time.

### 4. Perform Facet Surface Dynamics

Next, surface dynamics are performed 282 for each facet to satisfy the boundary conditions. A procedure 390 for performing surface dynamics for a facet is illustrated in FIG. 14.

The velocity and densities are sampled from the voxel to the facet *F_{α},* during the gather step 278 (FIG. 5). The velocity is then projected along the surface. The Boltzmann Equilibrium distribution is computed (392) based on the sampled density and projected velocity, and the density and velocity are scaled to satisfy the constraints. The resulting density and velocity are then used to compute the new Boltzmann Equilibrium distribution (392). The difference between the incoming distribution and the new Boltzmann distribution determined (394), and the combined momentum difference between all incoming states and the facet's corresponding Boltzmann distribution (396) are computed.

The momentum difference is projected along the tangential direction of the facet (398). From the momentum difference and the Boltzmann distribution, the outgoing flux for the facet is computed to satisfy the perfect slip boundary condition (399), by satisfying zero tangential flux.

To account for skin friction and other factors, the outgoing flux distribution can be augmented with a skin friction component based on a product of the skin friction coefficient of the surface and a difference of the equilibrium portions of the outgoing and incoming particle fluxes. A more detailed description of applying skin friction and correction to different energy levels of lattice required for perfect mass and energy conservations are presented in the '260 patent and the '391 patent.

### 5. Move From Voxels to Voxels

Referring again to FIG. 7, particles are moved between voxels along the three-dimensional rectilinear lattice (284). This voxel to voxel movement is the only movement operation performed on voxels that do not interact with the facets (i.e., voxels that are not located near a surface). In typical simulations, voxels that are not located near enough to a surface to interact with the surface constitute a large majority of the voxels.

Each of the separate states represents particles moving along the lattice with integer speeds in each of the three dimensions: *x, y,* and z. The integer speeds include: 0, ±1, and ±2. The sign of the speed indicates the direction in which a particle is moving along the corresponding axis.

For voxels that do not interact with a surface, the move operation is computationally quite simple. The entire population of a state is moved from its current voxel to its destination voxel during every time increment. At the same time, the particles of the destination voxel are moved from that voxel to their own destination voxels. For example, an energy level 1 particle that is moving in the +1x and +1y direction (1, 0, 0) is moved from its current voxel to one that is +1 over in the *x* direction and 0 for other direction. The particle ends up at its destination voxel with the same state it had before the move (1,0,0). Interactions within the voxel will likely change the particle count for that state based on local interactions with other particles and surfaces. If not, the particle will continue to move along the lattice at the same speed and direction.

The move operation becomes slightly more complicated for voxels that interact with one or more surfaces. This can result in one or more fractional particles being transferred to a facet. Transfer of such fractional particles to a facet results in fractional particles remaining in the voxels. These fractional particles are transferred to a voxel occupied by the facet.

Referring to FIG. 13, when a portion 360 of the particles of a given state for a voxel 362 is moved to a facet 364 (278), the remaining portion 366 is moved to a voxel 368 in which the facet 364 is located and from which particles of the state are directed to the facet 364. Thus, if the state population equaled 25 and the volume of the parallelepiped overlapped with the voxel equaled 0.25 (i.e., a quarter of the voxel intersects the parallelepiped), then 6.25 particles would be moved to the facet 364 and 18.75 particles would be moved to the voxel 368 occupied by the facet 364. Because multiple facets could intersect a single voxel, the number of particles of a given state transferred to a voxel occupied by one or more facets is the related to the fraction of the volume of the voxel not overlapped by parallelepipeds of the intersecting facets (e.g., the number of particles transferred to the voxel equals the total number of incoming particles from the source voxel multiplied by the fraction of the voxel not overlapped by parallelepipeds of the intersecting facets).

### 6. Scatter From Facets to Voxels

Next, the outgoing particles from each facet are scattered to the voxels 286 (FIG. 7). When advecting the particles from each facet to the voxels, only the move portion of the particle distribution is advected from the facet to the voxel. Essentially, this scatter is the reverse of the gather by which particles were moved from the voxels to the facets. The number of particles of a given state that move from a facet to a voxel is proportional to the outgoing flux of particles from the facet multiplied by the ratio of the parallelepiped volume overlapping the voxel to the total parallelepiped volume. A proportionality factor accounting for the volume reduction of partial voxels can also be included. For each state, the total number of particles directed from the facets to a voxel is determined based on the sum of the particles moving from each facet to that voxel.

After scattering particles from the facets to the voxels, combining them with particles that have advected in from surrounding voxels, and integerizing the result, it is possible that certain directions in certain voxels may either underflow (become negative) or overflow (exceed 255 in an eight-bit implementation). This would result in either a gain or loss in mass, momentum and energy after these quantities are truncated to fit in the allowed range of values. To protect against such occurrences, the mass, momentum, and energy that are out of bounds are accumulated prior to truncation of the offending state. For the energy to which the state belongs, an amount of mass equal to the value gained (due to underflow) or lost (due to overflow) is added back to randomly (or sequentially) selected states having the same energy and that are not themselves subject to overflow or underflow. The additional momentum resulting from this addition of mass and energy is accumulated and added to the momentum from the truncation. By only adding mass to the same energy states, both mass and energy are corrected when the mass counter reaches zero. Finally, the momentum is corrected using pushing/pulling techniques until the momentum accumulator is returned to zero.

### 7. Perform Fluid Dynamics

Fluid dynamics are performed (288) FIG. 7. This may be referred to as microdynamics or intravoxel operations. Similarly, the advection procedure may be referred to as intervoxel operations. The microdynamics operations described below may also be used to collide particles at a facet to produce a Boltzmann distribution.

The fluid dynamics is ensured in the Lattice Boltzmann equation models by a particular collision operator known as the BGK collision model. This collision model mimics the dynamics of the distribution in a real fluid system. After the advection step, the conserved quantities of a fluid system, specifically the density, momentum and the energy are obtained from the distribution function. From these quantities, the equilibrium distribution function can be fully specified. The choice of the velocity vector set and the weights, together with the Lattice Boltzmann equation ensures that the macroscopic behavior obeys the correct hydrodynamic equation.

The results of the process of FIG. 7 can be used in manufacturing a physical structure, e.g., using one or more computer-controlled manufacturing systems. For example, the simulation can be used to optimize a shape of a physical object for improved fluid flow around or through the object. The optimized shape can be used as path planning data for computer-aided manufacturing processes to produce the optimized shape. Examples of shapes that can be optimized include airfoil shapes for aerodynamic bodies, flow paths for internal pipe or channel flows (e.g., for a liquid cooling system), nozzles and diffusers for wind tunnels, etc.

In an example implementation, the process of FIG. 7 can be used to predict aeroacoustics for a jet engine. The fluid simulation involves high Mach number fluid flows, which can be prone to numerical instability. Using fractional particle advection as described in FIG. 3 can improve the stability of the simulation thereby increasing the accuracy of the aeroacoustics prediction. The aeroacoustics predictions inform the design and manufacturing of the jet engine.

Alternatively, or additionally, the results of the fluid flow simulation of FIG. 7 can be used to predict performance of an aerodynamic body (e.g., predicting generated lift or drag on an airfoil), predicting pressure head loss of a fluid flowing through a pipe or channel, and/or predicting the propagation of acoustic waves (e.g., predicting flow induced noise sources and acoustic wave propagation from an exterior of a vehicle such as a car or airplane to the interior of the vehicle). The techniques described herein improve the accuracy of such fluid flow simulations in predicting performance of an aerodynamic body, predicting pressure head loss of a fluid flowing through a pipe or channel, and/or predicting the thermal performance of a cooling system of an automobile.

### Variable Resolution

Variable resolution (as discussed in U.S. Patent 10,360,324, which is hereby incorporated in its entirety) can also be employed and would use voxels of different sizes, e.g., coarse voxels and fine voxels, for different regions of the mesh according to regions of interest. For example, regions of interest can include fine voxels to resolve fluid dynamics at smaller scales and with higher resolution. Outside regions of interest, coarse voxels can be used in the mesh to reduce the number of computations without reducing the accuracy of the fluid flow simulation in the regions of interest.

### Examples

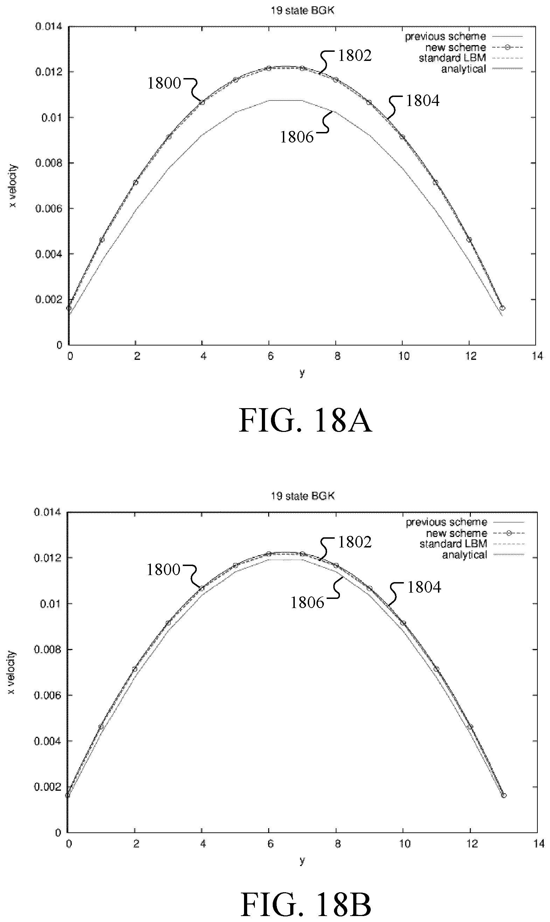

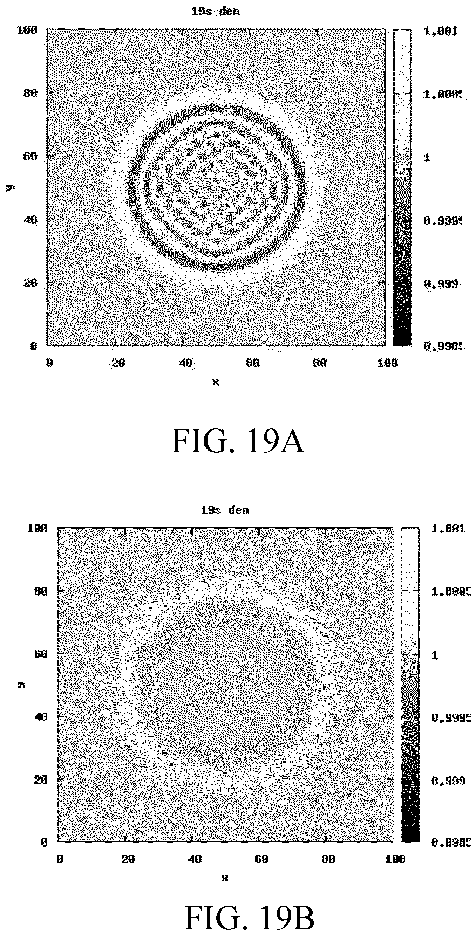

To demonstrate the performance of the approach of the present disclosure, three sets of benchmark cases are shown: a shear wave decay (FIGS. 16A-17B), a gravity driven channel flow (FIGS. 18A-18B), and a monopole density/pressure propagation (FIGS. 19A-19C). For all of the benchmark simulations, the D3Q19 LB model with BGK collision is applied for convenience.

FIGS. 16A-16B show the shear wave test. The initial flow velocity is set to *u_{y}*(*x,y,z*) *= u*₀ sin(2*πx*/*lx*), *uₓ = u_{z} =* 0, where *lx* = 32 and *u₀* = 0.1. The lattice viscosity is *v* = 0.002 which results in *τ* = 0.506 for the standard LBM and the approach of the present disclosure. *τ* = 0.5+0.006/γ for previous fractional advection models. The comparisons of decay rate are shown in FIGS. 16A-16B with *y =* 0.5 (FIG. 16A) and *y =* 0.1 (FIG. 16B). The present approach 1600 shows the same decay rate as the standard LBM 1602 and the analytical solution 1604 with different *γ* values. The previous fractional advection scheme 1606 shows noticeable deviation indicating additional numerical dissipation. The deviation is larger with *γ* = 0.5 (FIG. 16A) for the previous fractional advection approach 1606. Note, both the present approach and the previous scheme evolve at a fractional speed of *γ* compared to the standard LBM.

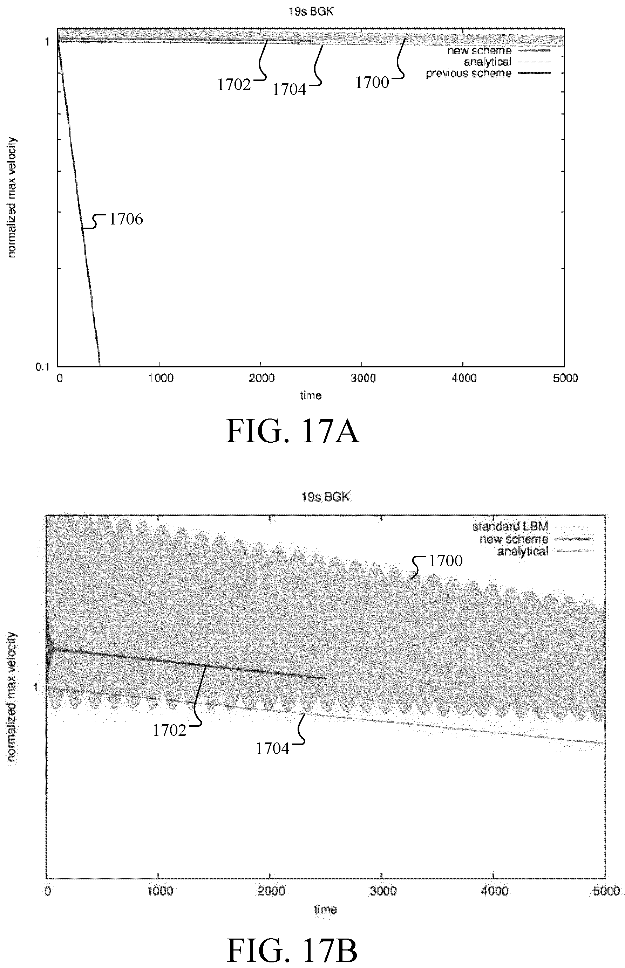

FIGS. 17A and 17B show results of the shear wave test with further reduced viscosity and resolution. The standard LBM 1700 starts to show numerical instability while both the present approach 1702 and previous scheme 1706 give stable solutions, and the results of the present approach 1702 match the analytical solution 1704 well.

FIGS. 18A and 18B show results from a two-dimensional gravity driven channel flow. The channel width is *ly =* 14 with periodic boundaries in *x* and *z* directions. The gravity is applied along the *x* direction, and the lattice viscosity is *v* = 0.002. The halfway bounce back boundary conditions are applied to the top and bottom walls. The velocity profile comparisons are shown in FIGS. 18A-18B with *y =* 0.5 (FIG. 18A) and *y =* 0.1 (FIG. 18B). The results of present approach 1800 are very close to the standard LBM 1802 and analytical solution 1804, while the results of the previous scheme 1806 show a dissipated velocity profile.

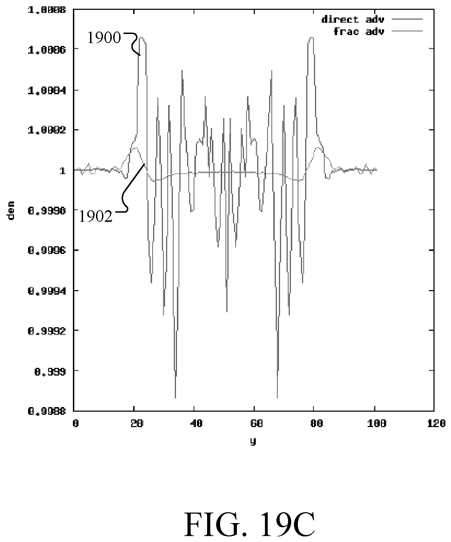

FIGS. 19A-19C show results from a two-dimensional monopole density/pressure wave propagation. Initially a higher density/pressure distribution *ρ* = 1.05ρ₀ is set in the cell at the center of the computation domain with *lx = ly =* 101. Periodic boundary conditions are applied on both *x* and *y* directions. When the simulation evolves, a density/pressure wave is formed and propagated isotropically away from the center at the speed of sound. FIGS. 19A and 19B show the comparisons of density spatial distributions for *γ* = 0.5 for the standard LBM (FIG. 19A) and the present approach (FIG. 19B). FIG. 19C illustrates centerline monopole density distributions for the standard LBM 1900 (direct advection) and the present approach 1902 (fractional advection). The present approach shows much less noise than the standard LBM indicating better numerical stability.

Embodiments of the subject matter and the functional operations described in this specification can be implemented in digital electronic circuitry, tangibly embodied computer software or firmware, computer hardware (including the structures disclosed in this specification and their structural equivalents), or in combinations of one or more of them. Embodiments of the subject matter described in this specification can be implemented as one or more computer programs (i.e., one or more modules of computer program instructions encoded on a tangible non-transitory program carrier for execution by, or to control the operation of, data processing apparatus). The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry (e.g., an FPGA (field programmable gate array) or an ASIC (application-specific integrated circuit)). In addition to hardware, the apparatus can optionally include code that produces an execution environment for computer programs (e.g., code that constitutes processor firmware, a protocol stack, a database management system, an operating system, or a combination of one or more of them).

A computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or another unit suitable for use in a computing environment. A computer program may, but need not, correspond to a file in a file system. A program can be stored in a portion of a file that holds other programs or data (e.g., one or more scripts stored in a markup language document, in a single file dedicated to the program in question, or in multiple coordinated files (e.g., files that store one or more modules, subprograms, or portions of code)). A computer program can be deployed so that the program is executed on one computer or on multiple computers that are located at one site or distributed across multiple sites and interconnected by a data communication network.

Computers suitable for the execution of a computer program can be based on general or special purpose microprocessors or both, or any other kind of central processing unit. Computer-readable media suitable for storing computer program instructions and data include all forms of non-volatile memory on media and memory devices, including by way of example semiconductor memory devices (e.g., EPROM, EEPROM, and flash memory devices), magnetic disks (e.g., internal hard disks or removable disks), magneto-optical disks, and CD-ROM and DVD-ROM disks. The processor and the memory can be supplemented by, or incorporated in, special purpose logic circuitry.

Embodiments of the subject matter described in this specification can be implemented in a computing system that includes a back-end component (e.g., as a data server), or that includes a middleware component (e.g., an application server), or that includes a front-end component (e.g., a client computer having a graphical user interface or a web browser through which a user can interact with an implementation of the subject matter described in this specification), or any combination of one or more such back-end, middleware, or front-end components. The components of the system can be interconnected by any form or medium of digital data communication (e.g., a communication network). Examples of communication networks include a local area network (LAN) and a wide area network (WAN) (e.g., the Internet).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user device (e.g., for purposes of displaying data to and receiving user input from a user interacting with the user device), which acts as a client. Data generated at the user device (e.g., a result of the user interaction) can be received from the user device at the server.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

### EMBODIMENTS

Although the present invention is defined in the claims, it should be understood that the present invention can also (alternatively) be defined in accordance with the following embodiments:
1. A computer system to improve stability of a fluid flow simulation in a three-dimensional computer-aided design (CAD) model of a simulation space, the computer system comprising:
   one or more processors; and
   a memory including:
      a mesh preparation engine for generating and storing a digital representation of a simulation space, the digital representation including a three-dimensional CAD model of the simulation space including a mesh represented as a plurality of voxels; and
      a simulation engine for reading, from the mesh preparation engine, the digital representation of the simulation space including the mesh,
      with the simulation engine storing instructions to improve stability of a fluid flow simulation, the instructions, when executed by the one or more processors, cause the one or more processors to perform operations comprising:
         reading, from the mesh preparation engine, the digital representation of the simulation space including the three-dimensional CAD model of the simulation space including the mesh represented as the plurality of voxels;
         determining a distribution of particles representing fluid flow in the plurality of voxels;
         determining a first portion of the distribution of particles comprising a non-equilibrium distribution of particles; and
   digitally simulating, in the digital representation, fluid flow in the mesh of the simulation space by advecting the first portion of the distribution of particles to different voxels of the plurality of voxels.
2. The computer system of embodiment 1, wherein the first portion of the distribution of particles further comprises a first portion of an equilibrium distribution of particles.
3. The computer system of embodiment 2, wherein the instructions further comprise determining a second portion of the distribution of particles comprising a second portion of the equilibrium distribution of particles.
4. The computer system of embodiment 3, wherein the first portion of the equilibrium distribution comprises a specified fraction of the equilibrium distribution.
5. The computer system of embodiment 4, wherein the second portion of the equilibrium distribution of particles comprises a complement of the specified fraction of the equilibrium distribution.
6. The computer system of embodiment 1, wherein advecting the first portion of the distribution of particles improves numerical stability of simulating the fluid flow and decreases numerical dissipation of simulating the fluid flow for low viscosity fluids compared with a conventional Lattice Boltzmann simulation using fractional advection.
7. The computer system of embodiment 1, wherein simulating the fluid flow uses an unmodified fluid viscosity.
8. The computer system of embodiment 1, wherein the instructions further comprise:
   reading, from the memory, the distribution of particles representing fluid flow in the plurality of voxels;
   storing, in the memory, the first portion of the distribution of particles comprising the non-equilibrium distribution of particles; and
   storing, in the memory, results of a digital simulation of the fluid flow in the digital representation of the simulation space including the mesh, the results generated by advecting the first portion of the distribution of particles to different voxels of the plurality of voxels.
9. A method implemented by a data processing system to improve stability of a fluid flow simulation in a three-dimensional computer-aided design (CAD) model of a simulation space, the method comprising:
   receiving, by a data processing system, a digital representation of a simulation space, the digital representation including a three-dimensional CAD model of the simulation space including a lattice structure represented as a plurality of voxels;
   determining, by the data processing system, a distribution of particles representing fluid flow in the plurality of voxels;
   determining, by the data processing system, a first portion of the distribution of particles comprising a non-equilibrium distribution of particles; and
   digitally simulating, in the digital representation by the data processing system, fluid flow in the lattice structure of the simulation space by advecting the first portion of the distribution of particles to different voxels of the plurality of voxels.
10. The method of embodiment 9, wherein the first portion of the distribution of particles further comprises a first portion of an equilibrium distribution of particles.
11. The method of embodiment 10, further comprising determining, by the data processing system, a second portion of the distribution of particles comprising a second portion of the equilibrium distribution of particles.
12. The method of embodiment 11, wherein the first portion of the equilibrium distribution comprises a specified fraction of the equilibrium distribution.
13. The method of embodiment 12, wherein the second portion of the equilibrium distribution of particles comprises a complement of the specified fraction of the equilibrium distribution.
14. The method of embodiment 9, wherein advecting the first portion of the distribution of particles improves numerical stability of simulating the fluid flow and decreases numerical dissipation of simulating the fluid flow for low viscosity fluids compared with a conventional Lattice Boltzmann simulation using fractional advection.
15. The method of embodiment 9, wherein simulating the fluid flow uses an unmodified fluid viscosity.
16. One or more non-transitory machine-readable storage devices storing instructions to improve stability of a fluid flow simulation in a three-dimensional computer-aided design (CAD) model of a simulation space, the instructions being executable by one or more processors, to cause performance of operations comprising:
   receiving a digital representation of a simulation space, the digital representation including a three-dimensional CAD model of the simulation space including a lattice structure represented as a plurality of voxels;
   determining a distribution of particles representing fluid flow in the plurality of voxels;
   determining a first portion of the distribution of particles comprising a non-equilibrium distribution of particles; and
   digitally simulating, in the digital representation, fluid flow in the lattice structure of the simulation space by advecting the first portion of the distribution of particles to different voxels of the plurality of voxels.
17. The one or more non-transitory machine-readable storage devices of embodiment 16, wherein the first portion of the distribution of particles further comprises a first portion of an equilibrium distribution of particles.
18. The one or more non-transitory machine-readable storage devices of embodiment 17, wherein the instructions further comprise determining a second portion of the distribution of particles comprising a second portion of the equilibrium distribution of particles.
19. The one or more non-transitory machine-readable storage devices of embodiment 18, wherein the first portion of the equilibrium distribution comprises a specified fraction of the equilibrium distribution.
20. The one or more non-transitory machine-readable storage devices of embodiment 19, wherein the second portion of the equilibrium distribution of particles comprises a complement of the specified fraction of the equilibrium distribution.

## Claims

1. A computer system to improve stability of a fluid flow simulation in a three-dimensional computer-aided design (CAD) model of a simulation space, the computer system comprising:
one or more processors; and
a memory including:
a mesh preparation engine for generating and storing a digital representation of a simulation space, the digital representation including a three-dimensional CAD model of the simulation space including a mesh represented as a plurality of voxels; and
a simulation engine for reading, from the mesh preparation engine, the digital representation of the simulation space including the mesh,
with the simulation engine storing instructions to improve stability of a fluid flow simulation, the instructions, when executed by the one or more processors, cause the one or more processors to perform operations comprising:
reading, from the mesh preparation engine, the digital representation of the simulation space including the three-dimensional CAD model of the simulation space including the mesh represented as the plurality of voxels;
determining a distribution of particles representing fluid flow in the plurality of voxels;
determining a first portion of the distribution of particles comprising a non-equilibrium distribution of particles; and
digitally simulating, in the digital representation, fluid flow in the mesh of the simulation space by advecting the first portion of the distribution of particles to different voxels of the plurality of voxels.

2. The computer system of claim 1, wherein the first portion of the distribution of particles further comprises a first portion of an equilibrium distribution of particles.

3. The computer system of claim 2, wherein the instructions further comprise determining a second portion of the distribution of particles comprising a second portion of the equilibrium distribution of particles.

4. The computer system of claim 3, wherein the first portion of the equilibrium distribution comprises a specified fraction of the equilibrium distribution.

5. The computer system of claim 4, wherein the second portion of the equilibrium distribution of particles comprises a complement of the specified fraction of the equilibrium distribution.

6. The computer system of claim 1, wherein advecting the first portion of the distribution of particles improves numerical stability of simulating the fluid flow and decreases numerical dissipation of simulating the fluid flow for low viscosity fluids compared with a conventional Lattice Boltzmann simulation using fractional advection.

7. The computer system of claim 1, wherein simulating the fluid flow uses an unmodified fluid viscosity.

8. The computer system of claim 1, wherein the instructions further comprise:
reading, from the memory, the distribution of particles representing fluid flow in the plurality of voxels;
storing, in the memory, the first portion of the distribution of particles comprising the non-equilibrium distribution of particles; and
storing, in the memory, results of a digital simulation of the fluid flow in the digital representation of the simulation space including the mesh, the results generated by advecting the first portion of the distribution of particles to different voxels of the plurality of voxels.

9. A method implemented by a data processing system to improve stability of a fluid flow simulation in a three-dimensional computer-aided design (CAD) model of a simulation space, the method comprising:
receiving, by a data processing system, a digital representation of a simulation space, the digital representation including a three-dimensional CAD model of the simulation space including a lattice structure represented as a plurality of voxels;
determining, by the data processing system, a distribution of particles representing fluid flow in the plurality of voxels;
determining, by the data processing system, a first portion of the distribution of particles comprising a non-equilibrium distribution of particles; and
digitally simulating, in the digital representation by the data processing system, fluid flow in the lattice structure of the simulation space by advecting the first portion of the distribution of particles to different voxels of the plurality of voxels.

10. The method of claim 9, wherein the first portion of the distribution of particles further comprises a first portion of an equilibrium distribution of particles.

11. The method of claim 10, further comprising determining, by the data processing system, a second portion of the distribution of particles comprising a second portion of the equilibrium distribution of particles.

12. The method of claim 11, wherein the first portion of the equilibrium distribution comprises a specified fraction of the equilibrium distribution, optionally wherein the second portion of the equilibrium distribution of particles comprises a complement of the specified fraction of the equilibrium distribution.

13. The method of claim 9, wherein advecting the first portion of the distribution of particles improves numerical stability of simulating the fluid flow and decreases numerical dissipation of simulating the fluid flow for low viscosity fluids compared with a conventional Lattice Boltzmann simulation using fractional advection.

14. The method of claim 9, wherein simulating the fluid flow uses an unmodified fluid viscosity.

15. One or more non-transitory machine-readable storage devices storing instructions to improve stability of a fluid flow simulation in a three-dimensional computer-aided design (CAD) model of a simulation space, the instructions being executable by one or more processors, to cause performance of operations comprising the method of any one of claims 9 to 14.
